# EUROPÄISCHE PATENTSCHRIFT

(11) **EP 3 093 537 B1**
(45) Veröffentlichungstag und Bekanntmachung des Hinweises auf die Patenterteilung: **03.04.2019**
(21) Anmeldenummer: 16169303.1
(22) Anmeldetag: 12.05.2016
(51) Int. Cl.: F16J 15/3212, F16J 15/3232, F16J 15/56, F16J 15/24

(54) **ABSTREIFANORDNUNG UND ABDICHTVORRICHTUNG**
STRIPPING ASSEMBLY AND A SEALING DEVICE
SYSTEME DE DEMOULAGE ET DISPOSITIF D'ETANCHEITE

(30) Priorität: 12.05.2015 DE 102015208773
(43) Veröffentlichungstag der Anmeldung: 16.11.2016
(73) Patentinhaber: STASSKOL GmbH, 39418 Stassfurt (DE)
(72) Erfinder: LANGELA, Marc, 39439Güsten (DE)
(74) Vertreter: Mehler Achler

(56) Entgegenhaltungen:
- AT-B1- 508 782
- DE-U- 7 222 739
- GB-A- 2 206 669
- US-A- 4 053 166

## Beschreibung

Die Erfindung betrifft eine Abstreifanordnung mit mindestens zwei Abstreifringen gemäß dem Oberbegriff des Anspruchs 1 und eine Abdichtvorrichtung mit mindestens einer Abstreifanordnung gemäß Anspruch 9.

Hubkolbenkompressoren besitzen eine Kolbenstange, welche durch einen Kreuzkopf mit dem Triebwerk verbunden ist. Um die reibungsfreie Funktion aller Triebwerksteile inklusive des Kreuzkopfes zu garantieren wird das System intensiv mit Öl geschmiert. Gerade bei sogenannten 'trockenlaufenden Kompressoren', d.h. bei Öl-freier Kompression des Gases im Zylinder darf das im Triebwerk notwendige Öl nicht in das zu verdichtende Gas gelangen.

Um einen Durchtritt von Öl vom Triebwerk in den Verdichtungsbereich zu verhindern, werden sogenannte Ölabstreifvorrichtungen verwendet, welche mit Abstreifringen bestückt sind und das Öl von der Kolbenstange möglichst vollständig abstreifen sollen.

Generell ist das Abstreifen von Öl von der inneren Oberfläche eines Zylinders oder der Oberfläche einer Kolbenstange eines Hubkolbenkompressors Stand der Technik.

Die US 4 053 166 A beschreibt zwei Abstreifringe, wobei eine Abstreifring mit einem Vorsprung in einer Ausnehmung des ersten Abstreifrings angeordnet ist.

Die US 1,327,801 A beschreibt einen Abstreifring aus Metall, welcher eine schmale Abstreifkante besitzt, um die Abstreifeffizienz auch bei axialem "Kippen" des Ringes aufrecht zu erhalten. Um ein "Aufschwimmen" des Abstreifringes zu verhindern, wird eine umlaufende Schulter an der abstreifenden, inneren Umfangsfläche des Rings vorgeschlagen. Nachteilig sind bei dieser Ausführung jedoch die nicht vorhandene Möglichkeit des Nachstellens bei Verschleiß, die fehlende Gasdichtigkeit des Ringes, sowie die Ausführung aus Metall, da durch die Verwendung von Abstreifringen aus Metall die Kolbenstange beschädigt wird.

Die GB 296,770 beschreibt einen Abstreifring aus Metall, welcher sich bei Verschleiß mittels einer Feder in Richtung auf die Stange nachstellt und welcher einen ausreichenden Ölablauf garantiert, um das abgestreifte Öl weiter verwenden zu können z. Bsp. durch Rückführung in das Triebwerk. Ebenso wie bei der US 1,327,801 A sind hier die Abstreifelemente aus Metall gefertigt und eine Gasdichtigkeit ist nicht vorhanden.

In der AT 409291B wird ein Abstreifring aus Metall in Kombination mit einem Drosselring aus Kunststoff beschrieben. Dieser Drosselring liegt kurbelseitig an der Kammerwand der Abstreifanordnung an und reduziert so den Eintritt des Öls in die Abstreifanordnung. Dieser Effekt ist sehr vorteilhaft und unterstreicht die Signifikanz einer Dichtigkeit der gesamten Abstreifanordnung, d.h. das Ausschließen möglicher Leckagepfade zum Einschleppen von Öl in und zum Ausschleppen von Öl aus der Abstreifanordnung. In dieser Ausführung hat der Drosselring den Nachteil, dass für das Anliegen an der Öl-seitigen Kammerwand kein Kontakt zur oszillierenden Stange bestehen darf. Dies ermöglicht wiederum einen Öldurchtritt entlang der Stange, wodurch ein signifikanter Leckagepfad zum Eintritt von Öl in das Abstreifgehäuse eröffnet wird. Da nach dem Abstreifring aus Metall keine weitere Abdichtung in Richtung des zu verdichtenden Gases erfolgt, ist eine Kontamination des zu verdichtenden Gases aufgrund von Öldurchtritt nicht auszuschließen.

Dass ein Öldurchtritt bei der AT 409291B in axialer Richtung zum Verdichtungsraum möglich ist, wurde erkannt, weil ein Gas-Dichtringset auf der dem Öl abgewandten Seite integriert wurde, um genau diesen Öldurchtritt in Richtung Verdichtungsraum zu verhindern. Diese Ausführung hat allerdings den Nachteil, dass die gesamte axiale Länge der Abstreifanordnung deutlich zunimmt und dass der auf der Stange verbleibende Ölfilm beim Rückhub vom Gas-Dichtringset abgestreift wird. Das abgestreifte Öl läuft dann in den Raum hinter der Abstreifanordnung, wobei die Abstreifanordnung eigentlich genau dieses verhindern sollte. Zusätzlich zu den oben beschriebenen Nachteilen ist auch in der AT 409291 ein Einsatz von Abstreifringen aus Metall vorgesehen, wodurch es wiederum zu Beschädigungen an der Kolbenstange kommen kann.

Die EP 0434908 B1 beschreibt einen Abstreifring aus einem PTFE-Werkstoff mit wenigstens zwei umlaufenden Dichtkanten. Es wird beschrieben, dass die dem abzudichtenden Raum zugewandte Fläche der Dichtkante mit der Stange einen steileren Winkel einschließt als mit der dem abzudichtenden Raum abgewandten Fläche der Dichtkante. Diese konstruktive Ausführung ist bei hydraulischen Abdichtungen sehr gebräuchlich und in zahlreichen Anmeldungen wie beispielsweise in der JP-H-10231936 A realisiert. Diese bekannte Ausführungsform soll beim Rückhub der Stange durch auftretende Druckdifferenzen vor und nach der Abstreifkante eine effiziente Rückführung des eventuell auf der Stange verbleibenden Ölfilms in den abzudichtenden Bereich gewährleisten. Die EP 0434908 B1 besitzt allerdings Nachteile in Bezug auf das zu lösende Problem, da ein Nachstellen auf die Stange bei eintretendem Verschleiß nicht möglich ist und auch kein Ablauf des abgestreiften Öls vorgesehen ist.

Aus der EP 2665950 B1 ist ein Ölabstreifring bekannt, welcher aus einem Haltering und einem in diesem Haltering angeordneten Abstreifring besteht. Beide Ringe werden aus Kunststoff gefertigt und beide Ringe werden segmentiert ausgeführt, so dass ein kontinuierliches Nachstellen auf die Stange bei Verschleiß möglich ist. Der Haltering ist in radialer Richtung mit Nuten versehen, so dass ein Ablauf des abgestreiften Öls zwecks Wiederverwendung möglich ist. Der Haltering besitzt jedoch auf der dem Öl abgewandten Seite und partiell auf der dem Öl zugewandten Seite eine Stützkante, welche wiederum das Aufschwimmen des Ringes auf einem Ölfilm ermöglichen und so die Abstreifwirkung reduzieren kann.

Durch die Ausbildung der sogenannten 'ersten Stirnfläche' als Stützfläche wird ebenso die potentielle Abstreifwirkung des Gesamtsystems reduziert. Ferner besitzen die Abstreifkanten der Abstreifersegmente des Abstreifringes nicht die in EP 0434908 B1 beschriebene vorteilhafte Form, so dass hierdurch wiederum die Dichtwirkung deutlich reduziert wird. Durch das gegenseitige Überdecken der Stöße von Abstreifring und Haltering wird zwar ein direkter Durchtritt von Öl in axialer Richtung vermieden, jedoch kann eine Ölleckage durch einen vorgezeichneten Leckagepfad entstehen, welcher aus den Kanälen, der Nut des Halterings und den Stoßstellen des Halteringes gebildet wird. Durch diesen vorgezeichneten Leckagepfad kann nicht nur Öl in den Verdichtungsbereich gelangen, sondern es kann auch ein Gasaustausch zwischen der dem Öl abgewandten Seite und der dem Öl zugewandten Seite erfolgen. Eine Öl- oder Gasdichtigkeit kann daher mit dieser technischen Lösung prinzipiell nicht realisiert werden.

In der AT 508782 B1 wird eine Abstreifanordnung aus Kunststoff beschrieben, welche aus einem L-förmigen Deckring und einem Abstreifring besteht. Beide Ringe sind mit einer Teilung versehen, so dass ein Nachstellen der Abstreifkante auf die Stange bei auftretendem Verschleiß möglich ist. Ferner ist ein Ablauf von Öl zwecks Wiedergewinnung durch radiale Ausnehmungen am Vorspannelement vorgesehen. Durch die formschlüssige Verbindung von L-förmigen Ring und Abstreifring werden die Teilungsstellen gegenseitig überdeckt, so dass ein Öl- und Gasdurchtritt in axialer Richtung vermieden wird. Nachteilig ist hier, dass der Abstreifring dadurch keine schmale Abstreifkante mehr besitzt, sondern dass der L-förmige Ring und der Abstreifring durch die Formschlüssigkeit eine gemeinsame Auflagefläche bilden. Hierdurch ist ein Aufschwimmen des Ringes möglich. Die Berührfläche gegenüber der Senkrechten auf die Abstreiffläche ist geneigt, damit beim Aufschwimmen der Auflagefläche (z. Bsp. beim Rückhub) der Abstreifring zusammen mit dem L-förmigen Ring angehoben wird. Im Besonderen ist zu bedenken, dass bei flächigem Kontakt des Ringes während des Hubes der Stange die in der US 1,327,801 A beschriebene Schrägstellung der Abstreifkante bzw. Abstreiffläche gegenüber der Stange erfolgt und dass hierdurch Öl unter die Abstreifkante gelangt und somit eine effiziente Abstreifwirkung verhindert wird.

Es ist Aufgabe der Erfindung, eine Abstreifanordnung derart weiterzuentwickeln, dass eine effizientere Abstreifwirkung erzielt wird, wobei die Abstreifanordnung kompakt sein soll und ein Aufschwimmen der Abstreifanordnung vermieden werden soll. Zusätzlich sollte die Abstreifanordnung eine Gasdichtigkeit garantieren, den Verschleiß der Kolbenstange möglichst gering halten und dadurch eine möglichst lange Lebensdauer garantieren.

Es ist auch Aufgabe eine entsprechende Abdichtungsvorrichtung bereitzustellen, insbesondere für den Einsatz in einem Hubkolbenkompressor.

Die Abstreifanordnung ist dadurch gekennzeichnet, dass der erste Abstreifring in mindestens einer Seitenfläche eine ringförmige Ausnehmung aufweist, in der der zweite Abstreifring angeordnet ist.

Die ringförmige Ausnehmung wird durch eine ringförmige Stufe in der Seitenfläche des ersten Abstreifrings gebildet. Die Ausnehmung weist vorzugsweise eine innenliegende Ringfläche und eine umlaufende Begrenzungsfläche auf.

Da der zweite Abstreifring in der ringförmigen Ausnehmung aufgenommen ist, wird die Baulänge der Abstreifanordnung bei gleichzeitiger Steigerung der Abstreifeffizienz durch die mindestens zwei Abstreifkanten der Abstreifringe verkürzt. Der Vorteil der Abstreifanordnung besteht darin, dass eine kompakte und auf einfache Weise zu montierende Anordnung mehrerer Abstreifringe geschaffen wird.

Die Abstreifkanten sind als spitze Kanten ausgeführt und liegen linienförmig an der abzudichtenden Stange an. In axialer Richtung, d.h. längs zur Stange gesehen, handelt es sich bei einer zweidimensionalen Betrachtung der Abstreifkante um punktförmige Auflagen.

Da der erste und der zweite Abstreifring die Stange nur mittels der Abstreifkanten kontaktieren, werden ein Aufschwimmen sowie ein Kippen der Abstreifanordnung vermieden. Ein Kippen der Abstreifanordnung wird auch dadurch weitgehend verhindert, dass der zweite Abstreifring in der Ausnehmung des ersten Abstreifrings fixiert ist und somit relative Bewegungen zueinander, die zu einer Kippbewegung führen könnten, nicht stattfinden können.

Wenn der erste Abstreifring in beiden Seitenflächen eine solche ringförmige Ausnehmung aufweist, können zwei zweite Abstreifringe am ersten Abstreifring angeordnet werden. Es besteht somit die Möglichkeit eine Abstreifanordnung mit drei Abstreifringen auszubilden.

Durch die Ausführung mit zwei bzw. drei separaten Abstreifkanten wird die Abstreifwirkung verdoppelt bzw. verdreifacht und gleichzeitig minimieren die in axialer Richtung vorgesehenen punktuellen Auflagen der Abstreifkanten die Wahrscheinlichkeit eines Aufschwimmens der Ringe, was wiederum zu einer Steigerung der Abstreifeffizienz führt.

Durch den Verbund der Abstreifringe werden Kippbewegungen der Abstreifanordnung weitgehend verhindert. Die in Umfangsrichtung linienförmig und in axialer Richtung punktförmig anliegenden Abstreifkanten behalten stets den Kontakt zur Stange und damit ihre Abstreifeffizienz bei.

Vorzugsweise ist der zweite Abstreifring formschlüssig in der ringförmigen Ausnehmung angeordnet. Diese Anordnung hat den Vorteil, dass die Abstreifanordnung vormontiert werden kann, weil die Abstreifringe durch den Formschluss fest miteinander verbunden sind.

Vorzugsweise liegt der zweite Abstreifring vollständig in der ringförmigen Ausnehmung des ersten Abstreifrings. Dies bedeutet, dass der zweite Abstreifring gegenüber der Seitenfläche, in der die ringförmige Ausnehmung vorgesehen ist, nicht vorsteht. Es wird damit eine besonders kompakte Anordnung und eine einheitliche Dichtfläche geschaffen.

Vorzugsweise entspricht die Breite der radial außenliegenden Umfangsfläche des zweiten Abstreifrings der Breite der umlaufenden Begrenzungsflanke der Ausnehmung. Vorzugsweise entspricht die Breite der ersten Seitenfläche des zweiten Abstreifrings der Breite der innenliegenden Ringfläche der Ausnehmung des ersten Abstreifrings. Der zweite Abstreifring steht gegenüber der Ausnehmung vorzugsweise lediglich in radialer Richtung, insbesondere mit seiner Abstreifkante, nach innen vor.

Um die gegenseitige Fixierung der Abstreifringe weiter zu verbessern, ist vorzugsweise vorgesehen, dass der erste Abstreifring erste Mittel und der zweite Abstreifring zweite Mittel aufweist, die zusammenwirken und eine Verdrehsicherungseinrichtung bilden.

Gemäß einer besonderen Ausführungsform ist vorgesehen, dass das erste Mittel mindestens eine in der zweiten Seitenfläche des ersten Abstreifrings angeordnete Aussparung ist und dass das zweite Mittel des zweiten Abstreifrings mindestens eine an der radial außen liegenden Umfangsfläche vorstehende Nase ist.

Da der erste Abstreifring die Ausnehmung zur Aufnahme des zweiten Abstreifrings aufweist, ist die Dicke D1 des ersten Abstreifrings größer als die Dicke D2 des zweiten Abstreifrings. Vorzugsweise ist die Dicke des ersten Abstreifrings D1 ≥ 1,5 * D2, insbesondere ≥ 2 * D2, wodurch die Stabilität der Abstreifanordnung verbessert wird.

Vorzugsweise weisen die radial innen liegenden Umfangsflächen der Abstreifringe jeweils eine erste Innenfläche und eine zweite Innenfläche auf, wobei sich die ersten Innenflächen jeweils von der ersten Seitenfläche bis zur Abstreifkante erstrecken und wobei die zweite Innenfläche des ersten Abstreifringes sich von einer innen liegenden Ringfläche der Ausnehmung bis zur Abstreifkante und die zweite Innenfläche des zweiten Abstreifringes sich von der zweiten Seitenfläche bis zur Abstreifkante erstrecken.

Die ersten und zweiten Innenflächen sind vorzugsweise jeweils zueinander geneigt angeordnet, so dass eine linienförmige Abstreifkante an den beiden Abstreifringen gebildet wird.

Die ersten Innenflächen bilden vorzugsweise mit einer in der jeweiligen Abstreifkante liegenden Ebene E1 bzw. E2 einen Winkel α₁ bzw. α₂ und die zweiten Innenflächen bilden mit der jeweiligen Ebene E1 bzw. E2 einen Winkel β₁ bzw. β₂. Die Winkel α₁, α₂, β₁ und β₂ sind vorzugsweise größer 90°. Die Ebenen E₁ und E₂ stehen senkrecht auf der Mittelachse der Abstreifanordnung.

Die Winkel α₁, α₂ sind vorzugsweise größer als die Winkel β₁ und β₂. Die Abstreifanordnung wird vorzugsweise derart, z.B. in einem Hubkolbenverdichter, angeordnet, dass die ersten Innenflächen dem abzudichtenden Raum zugewandt und die zweiten Innenflächen dem abzudichtenden Raum abgewandt sind. Die Winkel α₁, α₂ liegen vorzugsweise im Bereich von 120° bis 150°. Die Winkel β₁ und β₂ liegen vorzugsweise im Bereich von 95° bis 115°.

Als optimal haben sich 105° ± 5° für die Winkel β₁ und β₂ und 135° ± 5° für die Winkel α₁ und α₂ erwiesen. Dadurch wird bei eventuell auftretender Leckage ein effizientes Rückführen des Mediums in den abzudichtenden Bereich gewährleistet.

Gemäß einer bevorzugten Ausführungsform sind die Winkel α₁ und α₂ gleich groß und die Winkel β₁ und β₂ ebenfalls gleich groß. Die Abstreifcharakteristik beider Abstreifringe ist somit gleich.

Vorzugsweise weist der erste Abstreifring an der ersten Seitenfläche eine umlaufende Druckfläche auf, die mit der Ebene E1 einen Winkel γ bildet. Der Winkel γ beträgt vorzugsweise 30° bis 60°. Die Druckfläche ist somit konisch ausgebildet und dient als Gleit- und Angriffsfläche für einen Anpressring in einer Abdichtvorrichtung. Ein solcher Anpressring besitzt eine komplementäre Pressfläche, so dass auf den ersten Abstreifring eine Kraftkomponente senkrecht zur Ebene E1 ausgeübt werden kann. Dies wird im Zusammenhang mit der Abdichtvorrichtung näher erläutert.

Um ein Nachstellen der Abstreifkanten bei auftretendem Verschleiß auf den Durchmesser der Stange zu gewährleisten, sind sowohl der erste Abstreifring als auch der zweite Abstreifring vorzugsweise mit mindestens einem Trennschnitt versehen. Diese Trennschnitte erzeugen Zwischenräume, welche allgemeinhin als Stoßspiele bezeichnet werden und welche sich bei Verschleiß während der Lebensdauer der Abstreifanordnung schließen und so sicherstellen, dass der Kontakt beider Abstreifkanten zur Stange stets vorhanden ist.

Um dieses Nachstellen zu ermöglichen, befindet sich an der radial außen liegenden Umfangsfläche des ersten Abstreifrings vorzugsweise eine Zugfedereinrichtung, die vorzugsweise innerhalb einer in Umfangsrichtung verlaufenden Nut angeordnet ist. Der zweite Abstreifring benötigt keine eigene Zugfedereinrichtung, weil er in der ringförmigen Ausnehmung des ersten Abstreifrings angeordnet ist und durch die Nachstellbewegung des ersten Abstreifrings ebenfalls nachgestellt wird. Der Druck dieser gemeinsamen Zugfedereinrichtung sorgt für ein ständiges Anliegen der Abstreifkanten an der abzudichtenden Stange.

Bevorzugt besitzen der erste Abstreifring und der zweite Abstreifring jeweils nur einen Trennschnitt, wobei auch Ausführungsformen mit mehreren Trennschnitten möglich sind. Bevorzugt verläuft der Trennschnitt bzw. verlaufen die Trennschnitte in radialer Richtung. Die Trennschnitte können auch in anderen Schnittformen ausgeführt werden, welche ein Nachführen der Abstreifkanten in Richtung der Stange bei Verschleiß erlauben. Die Trennschnitte können beispielsweise auch tangential zum Innenumfang des Abstreifrings verlaufen.

Vorzugsweise sind die Trennschnitte der Abstreifringe derart angeordnet, dass der mindestens eine Trennschnitt des ersten Abstreifrings vom zweiten Abstreifring überdeckt ist und dass der mindestens eine Trennschnitt des zweiten Abstreifrings vom ersten Abstreifring überdeckt ist. In einer bevorzugten Ausführungsform besitzt sowohl der erste Abstreifring als auch der zweite Abstreifring je einen radialen Trennschnitt. Um einen direkten Durchtritt des Mediums zu verhindern, sind diese Trennschnitte um 180 ° versetzt angeordnet.

Vorzugswiese ist die Aussparung beiderseits eines radialen Trennschnitts vorgesehen.

Um ein gegenseitiges Verdrehen der Abstreifringe zu verhindern, wird der zweite Abstreifring in der bevorzugten Ausführungsform mit einer Nase als Verdrehsicherung versehen, welche in eine Aussparung eingreift, die beidseitig eines radialen Trennschnitts des ersten Abstreifrings vorgesehen ist. Somit kann gewährleistet werden, dass die Trennschnitte der beiden Ringe vom jeweils anderen Ring überdeckt werden.

Durch die beschriebene gegenseitige Überdeckung der Trennschnitte vom ersten Abstreifring und zweiten Abstreifring in axialer Richtung durch den jeweils anderen Ring wird der direkte Durchtritt des Mediums unterbunden. Bei einigen Anwendungen kann es aber notwendig sein, dass gänzlich alle Leckagepfade ausgeschlossen werden können. Hier muss die Abstreifanordnung in einer gasdichten Variante ausgeführt werden.

Um eine Gasdichtigkeit zu erzielen, ist das durch den Trennschnitt entstandene Stoßspiel des zweiten Abstreifringes vorzugsweise in überlappender Form ausgeführt. Vorzugsweise weist der zweite Abstreifring am Trennschnitt zwei Lappen auf, die den Zwischenraum des Trennschnitts gegenseitig in axialer Richtung überdecken. Der zweite Abstreifring weist am Trennschnitt vorzugsweise einen dem Medium zugewandten ersten Lappen und einem dem Medium abgewandten zweiten Lappen auf, die sich in axialer Richtung überdecken. Vorzugsweise liegen die beiden Lappen im Bereich der Abstreifkante aneinander an. Die Anlagefläche der beiden Lappen wird in radialer Richtung durch die umlaufende Begrenzungsfläche der Ausnehmung des ersten Abstreifrings überdeckt. Die Ausnehmung hat in Verbindung mit der geteilten Ausführung des zweiten Abstreifrings somit den weiteren Vorteil, dass eine Gasdichtigkeit realisiert und jeglicher Leckagepfad für das Medium ausgeschlossen werden kann.

Um das Medium, dass von der Abstreifanordnung abgestreift wurde, nach außen abzuleiten, ist gemäß einer Ausführungsform vorgesehen, dass der erste Abstreifring mindestens eine radiale Bohrung aufweist, die die radial innen liegende Umfangsfläche mit der radial außen liegenden Umfangsfläche verbindet. Vorzugsweise liegt diese mindestens eine radiale Bohrung mindestens teilweise im Bereich der ringförmigen Ausnehmung. An der außen liegenden Umfangsfläche des ersten Abstreifrings mündet diese radiale Bohrung vorzugsweise in der umlaufenden Nut, in der die Zugfedereinrichtung angeordnet ist. Um ein Ablaufen des Mediums zu gewährleisten, ist der Durchmesser der Bohrung vorzugsweise größer als der Durchmesser der Zugfedereinrichtung bzw. größer als die Breite der Nut, in der die Zugfedereinrichtung angeordnet ist.

Der erste Abstreifring und der zweite Abstreifring sind vorzugsweise aus einem Kunststoffmaterial gefertigt. Die Verwendung von Kunststoffmaterialien hat den Vorteil, dass die Stange, die in der Regel aus Metall besteht, nicht beschädigt wird. Die eingesetzten Materialien zur Fertigung der Abstreifringe können auf Kunststoffen basieren wie beispielsweise Polytetrafluorethylen (PTFE), Polyetheretherketon (PEEK), Polyimid (PI), Polyamid (PA), oder Polyoxymethylen (POM). Diese bevorzugten Polymere bilden das Matrixmaterial des Kunststoffmaterials und sind mit einem Anteil ≥ 50 Gew.-% bezogen auf das gesamte Kunststoffmaterial enthalten. Jeder andere Kunststoff, welcher von seinen Eigenschaften die Anforderungen an die mechanische Stabilität und die Verschleißfestigkeit erfüllt, kann ebenfalls eingesetzt werden. Es können beide Abstreifringe aus dem gleichen Kunststoffmaterial gefertigt werden, dies ist aber nicht zwingend notwendig.

Vorzugsweise weist das Kunststoffmaterial mindestens einen Füllstoff aus der Gruppe Glasfasern, Kunststofffasern, Polyphenylensulfid, Kohlenstoff, Graphit und Molybdändisulfid aufweist. Diese Füllstoffe haben den Vorteil, dass die Festigkeit des Kunststoffmaterials dadurch erhöht werden kann.

Der Anteil der Füllstoffe liegt vorzugsweise im Bereich zwischen 5 Gew.-% und 50 Gew.-% bezogen auf das gesamte Kunststoffmaterial.

Die erfindungsgemäße Abdichtvorrichtung umfasst ein Gehäuse, das eine Umfangswand und zwei Stirnwände aufweist, wobei im Gehäuse mindestens eine Abstreifanordnung angeordnet ist.

Die Abdichtvorrichtung umfasst vorzugsweise einen Anpressring, der zwischen einer Stirnwand des Gehäuses und einer Abstreifanordnung angeordnet ist. Der Anpressring sorgt für eine Verspannung der Abstreifanordnung in axialer Richtung innerhalb des für die Abstreifanordnung vorgesehenen Gehäuses.

Der Anpressring weist vorzugsweise mindestens eine umlaufende Pressfläche auf, die an der Druckfläche des ersten Abstreifrings anliegt. Die Pressfläche ist komplementär zur Druckfläche ausgebildet. Die Pressfläche ist vorzugsweise konisch ausgebildet. Durch das Anliegen der abgeschrägten Pressfläche des Anpressrings an der abgeschrägten Druckfläche des ersten Abstreifrings wird die von dem Anpressring auf die Abstreifanordnung ausgeübte Kraft in eine radiale und in eine axiale Komponente zerlegt. Die axiale Kraftkomponente wirkt auf den ersten Abstreifring und den darin gefangenen zweiten Abstreifring derart, dass beide Abstreifringe mit ihren dem Anpressring abgewandten zweiten Seitenflächen an die Stirnwand des Gehäuses der Abdichtvorrichtung gepresst werden und so eine hohe Dichtwirkung auch zwischen den Flächen der Abstreifanordnung und des Gehäuses bzw. eines Deckels des Gehäuses erzielt werden können. Es ist auch möglich zwischen der Gehäusewand und der Abstreifanordnung mit Anpressring eine weitere Abstreifanordnung vorzusehen, in der der erste Abstreifring keine Druckfläche aufweisen muss.

Gemäß einer weiteren Ausführungsform ist mindestens ein Anpressring vorgesehen, der zwischen zwei Abstreifanordnungen angeordnet ist. Ein solcher Anpressring weist vorzugsweise zwei umlaufende Pressflächen auf, die axial gegenüberliegend angeordnet sind und die an den Druckflächen von zwei benachbarten ersten Abstreifringen von zwei Abstreifanordnungen anliegen.

Auch der Anpressring weist vorzugsweise mindestens einen Trennschnitt mit einem Zwischenraum auf, wobei der Trennschnitt radial verlaufen oder beispielsweise auch tangential zum Innenumfang des Pressrings verlaufen kann.

Der Anpressring weist vorzugsweise in seiner radial außen liegenden Umfangsfläche mindestens eine umlaufende Nut auf.

In der umlaufenden Nut ist vorzugsweise eine Zugfedereinrichtung angeordnet.

Der Anpressring kann auch als Federteller mit in axialer Richtung wirkenden Druckfedern ausgestaltet sein. Auch kann der Anpressring als Tellerfeder ausgebildet sein. In diesen Fällen kann ggf. auch auf die abgeschrägte Druckfläche am ersten Abstreifring verzichtet werden, insofern die Kraft direkt in axialer Richtung wirkt und so eine Kräftezerlegung zwischen radialer und axialer Richtung nicht nötig ist.

Um das Medium, welches von der Abstreifanordnung abgestreift wurde, wieder in das Kurbelgehäuse zurückzuführen, ist vorzugsweise ein Ablauf des abgestreiften Mediums in radialer Richtung vorgesehen. Hierzu kann der Anpressring zusätzlich oder alternativ zu den radialen Bohrungen des ersten Abstreifrings mit Nuten und/oder Einfräsungen versehen sein, welche in radialer Richtung an der der Abstreifanordnung zugewandten Fläche oder an der der Abstreifanordnung abgewandten Fläche eingebracht sind. Zusätzlich können Bohrungen im Anpressring in axialer Richtung für eine bessere Verteilung des abgestreiften Mediums und somit für einen besseren Ablauf des Mediums in radialer Richtung sorgen.

Damit das Medium z.B. wieder in das Triebwerk zurück gelangen kann oder für einen anderen Zweck wiedergewonnen werden kann, besitzt das für die Abstreifanordnung vorgesehene Gehäuse eine oder mehrere Ablaufbohrungen durch die das Medium aus dem Gehäuse austreten kann. Zusätzlich zu den Bohrungen und Ausfräsungen im Anpressring können auch radiale Bohrungen im ersten Abstreifring vorgesehen sein, um einen Ölablauf aus dem Bereich zwischen der Abstreifkante des ersten Abstreifrings und der Abstreifkante des zweiten Abstreifrings zu ermöglichen.

Erfindungsgemäß weist ein Kompressor, insbesondere Hubkolbenkompressor, mit einer Stange, insbesondere einer Kolbenstange und einem Verdichtungsraum mindestens eine Abstreifanordnung und/oder mindestens eine Abdichtvorrichtung auf.

Die Abstreifanordnung ist vorzugsweise derart in dem Gehäuse angeordnet, dass die zweite Innenfläche der Abstreifringe dem Verdichtungsraum zugewandt ist.

Gerade bei Kompressoren zum Verdichten von explosiven, brennbaren, hochreaktiven und/oder giftigen Gasen muss gewährleistet werden, dass kein Gas ins Triebwerk gelangen kann. Hierzu wird oft ein klassisches gasdichtes Dichtringpaar bestehend aus Deckring und Dichtring zusätzlich zu der eigentlichen Abstreifanordnung in das Gehäuse der Abdichtvorrichtung integriert. Dabei wird das zusätzliche Dichtringpaar aus Kunststoff, meist aus einem PTFE-Werkstoff gefertigt. Die Installation des Dichtringpaares erfolgt gegenüber der eigentlichen Abstreifanordnung in Richtung des Verdichtungsraumes, da ein Rücklauf des Mediums in Richtung des Kurbelgehäuses möglich sein muss, um abgestreiftes Medium ins Triebwerk zurückzuführen. Ein zusätzliches gasdichtes Ringpaar kann also nur zwischen Abstreifanordnung und Verdichtungsraum installiert werden. Dies hat allerdings einen deutlichen Einfluss auf die Leckage des Mediums, da jenes Medium, welches nach der Abstreifanordnung noch als Film auf der Stange verbleibt, durch das zusätzliche Dichtringpaar beim Rückhub abgestreift wird und sich so auf der Seite des Verdichtungsraumes ansammelt.

Durch die erfindungsgemäße gasdichte Ausführungsform der Abdichtvorrichtung kann auf dieses zusätzliche Dichtringpaar verzichtet werden, da das Abdichten von der Abstreifanordnung selbst übernommen wird. Hier sind die Abstreifkanten derart beschaffen, dass eventuell auf der Stange verbleibendes Medium beim Rückhub wieder effizient in den abzudichtenden Raum zurückgeführt wird.

Um eine optimale Dichtwirkung der Abstreifanordnung zu erzielen, müssen die dem abzudichtenden ölhaltigen Raum abgewandten bzw. die dem Verdichtungsraum zugewandten zweiten Seitenflächen des ersten Abstreifrings und des zweiten Abstreifringes sich in der gleichen Ebene befinden und sie müssen an die zweite Stirnwand des Gehäuses der Abdichtvorrichtung bzw. je nach konstruktiver Ausführung an die Wand des Gehäusedeckels (welche in diesem Fall ebenfalls als zweite Stirnwand bezeichnet wird) angepresst werden.

Dies wird in der bevorzugten Variante dadurch erreicht, dass der erste Abstreifring an der dem abzudichtenden Medium zugewandten ersten Seitenfläche, d.h. an der dem Verdichtungsraum abgewandten ersten Seitenfläche eine gegenüber der auf der Stange stehenden senkrechten Ebene E1 abgeschrägte Druckfläche besitzt. An diese abgeschrägte Druckfläche des ersten Abstreifrings liegt die abgeschrägte Pressfläche des Anpressrings an. Dieser Anpressring sorgt für Verspannung der Abstreifanordnung in axialer Richtung innerhalb des für die Abstreifanordnung vorgesehenen Gehäuses. Das Aufbringen einer Anpresskraft in axialer Richtung erfolgt durch eine Kräftezerlegung.

Der Anpressring ist vorzugsweise durch Trennschnitte als geteilter Ring ausgeführt und in einer äußeren umlaufenden Nut mit einer Zugfedereinrichtung - bevorzugt in Form einer Schlauchfeder - versehen.

In einer bevorzugten Ausführungsform handelt es sich bei den Trennschnitten um drei radiale Schnitte. Der Anpressring kann aber auch über jede anders geartete Trennung verfügen, die ein Nachstellen der Ringsegmente in Richtung der Stange erlaubt.

Die Segmente werden durch die Kraft der Zugfedereinrichtung zur Stange hin mit einer Kraft beaufschlagt und über das Anliegen der abgeschrägten Pressfläche des Anpressrings an der abgeschrägten Druckfläche des ersten Abstreifrings wird diese Kraft in eine radiale und eine axiale Komponente zerlegt. Die axiale Kraftkomponente wirkt auf den ersten Abstreifring und den darin gefangenen zweiten Abstreifring derart, dass diese Ringe mit ihren dem Anpressring abgewandten zweiten Seitenflächen an die zweite Stirnwand des Gehäuses der Abdichtvorrichtung gepresst werden und so eine hohe Dichtwirkung auch zwischen den Flächen der Abstreifanordnung und des Gehäuses bzw. des Deckels erzielen können.

Bei dieser Realisierung der axialen Anpressung bzw. axialen Verspannung handelt es sich um die bevorzugte Ausführungsform. Es können aber auch alle anderen Prinzipien der axialen Verspannung angewendet werden, solange gewährleistet ist, dass eine Kraft erzeugt wird, welche in axialer Richtung auf den ersten Abstreifring der Abstreifanordnung wirkt.

Vorzugsweise ist die Abstreifanordnung derart im Gehäuse des Kompressors angeordnet, dass die ersten Innenflächen der Abstreifringe dem Verdichtungsraum abgewandt sind.

Gemäß einer bevorzugten Ausführungsform weist die Abdichtvorrichtung mindestens zwei Abstreifanordnungen auf, wobei eine erste Abstreifanordnung dem Verdichtungsraum zugewandt und eine zweite Abstreifanordnung dem Verdichtungsraum abgewandt angeordnet ist und wobei der zweite Abstreifring der ersten Abstreifeinrichtung dem Verdichtungsraum zugewandt und der zweite Abstreifring der zweiten Abstreifeinrichtung dem Verdichtungsraum abgewandt angeordnet ist.

Neben den nur linienförmig in Umfangrichtung der Stange anliegenden Abstreifkanten und der damit verbundenen Vermeidung von 'Kippeffekten' bzw. eines 'Aufschwimmens der Abstreifkanten' wird die Abstreifeffizienz auch durch die beschriebene Gasdichtigkeit, d.h. durch die Abwesenheit direkter und indirekter Leckagepfade deutlich gesteigert.

Diese Gasdichtigkeit kann in einer Ausführung der Abdichtvorrichtung weiter gesteigert werden, indem sie sowohl zu der dem Medium zugewandten als auch zu der dem Medium abgewandten Seite besteht. Hierzu dichtet eine Abstreifanordnung wie auch in den bereits beschriebenen Ausführungsformen den Innenraum des Gehäuses in Richtung des Verdichtungsraums ab. Zusätzlich kann eine weitere Abstreifanordnung in Richtung des Kurbelgehäuses installiert werden.

Hierzu werden der erste Abstreifring und der zweite Abstreifring in der weiteren Abstreifanordnung axial in umgekehrter Reihenfolge angeordnet, d.h. der zweite Abstreifring befindet sich in einer kurbelseitig eingebrachten ringförmigen Ausnehmung des ersten Abstreifrings. Beide erste Abstreifringe besitzen jeweils eine abgeschrägte Druckfläche, welche zur Innenseite des Einbauraums bzw. Gehäuses hin orientiert ist. Mit Hilfe eines Anpressrings, welcher zwei axial gegenüberliegend angeordnete abgeschrägte Pressflächen besitzt, werden beide Abstreifanordnungen gegen die jeweilige Stirnwand des Gehäuses bzw. des Deckels gedrückt, so dass eine Gasdichtigkeit sowohl in Richtung des Kurbelgehäuses als auch in Richtung des Verdichtungsraumes besteht und so eine Leckage des Mediums deutlich reduziert wird. Bei beiden Abstreifanordnungen sind die Winkel β₁ und β₂ dem Verdichtungsraum zugewandt und die Winkel α₁ und α₂ dem Kurbelgehäuse zugewandt. Der Verdichtungsraum steht für die Medium abgewandte Seite und das Kurbelgehäuse für die Medium zugewandte Seite, da in der bevorzugten Anwendung in einem Hubkolbenkompressor das im Kürbelgehäuse befindliche Öl in Richtung des Verdichtungsraumes zurückgehalten werden soll.

Der oben beschriebene Anpressring mit zwei axial gegenüberliegenden abgeschrägten Pressflächen kann mit einer oder mehreren Zugfedereinrichtungen - bevorzugt Schlauchfedern - in Umfangsrichtung umgeben sein, um die Kraft aufzubringen, welche durch die erwähnte Zerlegung der Kräftevektoren in eine radiale und eine axiale Komponente aufgespalten wird. Die axiale Komponente wirkt dabei in beide Richtungen und durch das beidseitige Anliegen der abgeschrägten Pressflächen des Anpressrings an den abgeschrägten Druckflächen der beiden ersten Abstreifringe wird die für eine Verspannung der ersten Abstreifringe benötigte in axialer Richtung wirkende Kraft auf die ersten Abstreifringe übertragen.

Neben dieser Funktion der Kraftbeaufschlagung kann auch der beidseitig wirkende Anpressring mit radialen Fräsungen und axialen Bohrungen ausgeführt sein, damit eventuell in das Gehäuse eindringendes Medium nach dem Abstreifen von der Stange in radialer Richtung abfließen und durch eine oder mehrere Ablaufbohrungen in das Triebwerk gelangen bzw. zur weiteren Verwendung rückgewonnen werden kann.

Außer dem beschriebenen beidseitig wirkenden Anpressring können auch zwei einseitig wirkende Anpressringe derart kombiniert werden, dass ihre den abgeschrägten Pressflächen gegenüberliegenden planen Flächen axial zueinander hinzeigen. Auch so wird eine axiale Vorspannung in beide Richtungen erreicht. Die beiden axial gegenseitig angeordneten Anpressringe können sich auch mit den entsprechenden Abstreifanordnungen in zwei räumlich voneinander getrennten Einbauräumen bzw. in zwei separaten Abdichtvorrichtungen entlang der Stange befinden, um eine beidseitige Abstreifwirkung zu erzielen.

Die beschriebene Abstreifanordnung bzw. Abdichtvorrichtung dient bevorzugt zur Abdichtung von Kolbenstangen in Hubkolbenkompressoren. Hier kann die Abstreifanordnung sowohl in einer separaten Abdichtvorrichtung ausgeführt sein, als auch in einer bestehenden Dichtanordnung wie beispielsweise der Kolbenstangenpackung integriert sein. Es ist aber auch jede andere Anwendung denkbar, bei der eine Stange oder Welle bei oszillierender oder rotierender Bewegung gegenüber einem gasförmigen, flüssigen oder festen Medium abgedichtet werden muss. Dies kann insbesondere bei Kompressoren unter rotierender Bewegung, wie Turbokompressoren und Schraubenkompressoren, bei Gebläsen, bei Mischern, bei Ventilatoren, Mühlen und Dekantern der Fall sein.

Zum verbesserten Verständnis der Erfindung und zur Erläuterung von möglichen Ausführungsformen sind die folgenden Figuren hinzugefügt. Es zeigen:
- Figur 1: einen Hubkolbenkompressor im Längsschnitt,
- Figur 2: eine Abstreifanordnung im Querschnitt,
- Figur 3: eine Draufsicht auf die in Figur 2 gezeigte Abstreifanordnung,
- Figur 4: eine vergrößerte Darstellung des oberen Bereichs der Abstreifanordnung gemäß der Figur 2,
- Figur 5: einen dreiteiligen Anpressring in perspektivischer Darstellung,
- Figur 6: den in Figur 5 gezeigten Abstreifring in Seitenansicht,
- Figur 7: den in den Figuren 5 und 6 dargestellten Abstreifring in Draufsicht,
- Figur 8: eine Abdichtvorrichtung mit zwei Abstreifanordnungen gemäß einer ersten Ausführungsform im Schnitt,
- Figur 9: eine Abdichtvorrichtung mit zwei Abstreifanordnungen gemäß einer weiteren Ausführungsform im Schnitt,
- Figur 10: eine weitere Ausführungsform einer Abstreifanordnung zusammen mit einem Anpressring,
- Figur 11: eine weitere Ausführungsform eines zweiten Abstreifrings im Schnitt,
- Figur 12: eine Abstreifanordnung mit einem zweiten Abstreifring gemäß Figur 11,
- Figur 13: eine Abdichtvorrichtung gemäß einer weiteren Ausführungsform im Schnitt, und
- Figur 14: eine Abstreifanordnung gemäß einer weiteren Ausführungsform.

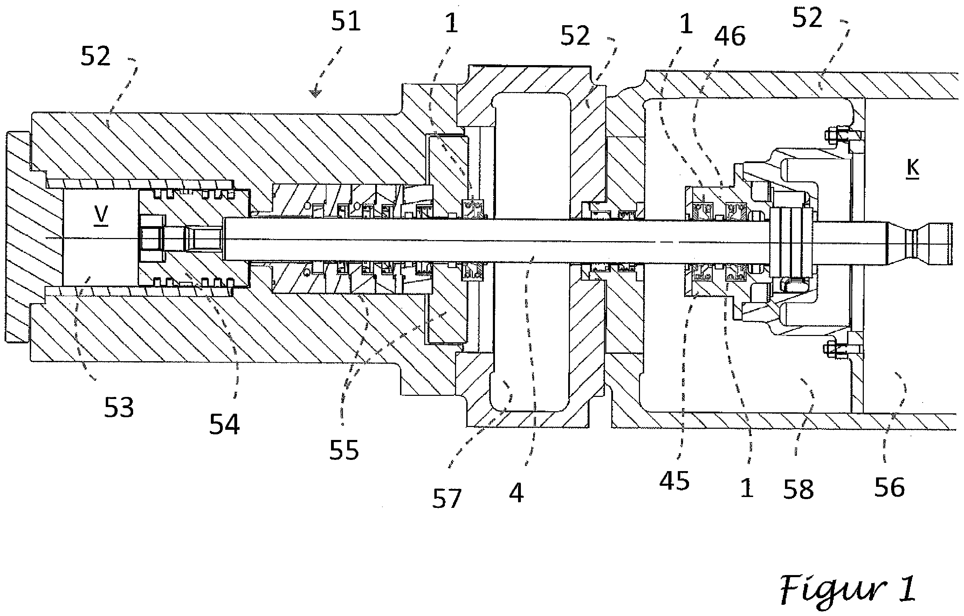

Figur 1 zeigt als Beispiel für Kompressoren einen Hubkolbenkompressor in einem Schnittbild, dessen Schnittebene entlang der Mittellinie einer Stange 4 verläuft, die in dieser Ausführungsform eine Kolbenstange ist. Der Hubkolbenkompressor 51 besitzt in einem Kompressorgehäuse 52 einen Verdichtungsraum 53, in dem ein Kolben 54 die Verdichtungsarbeit leistet. Der Verdichtungsraum 53 wird gegenüber der Stange 4 mit Hilfe einer sogenannten Kolbenstangenpackungen 55 abgedichtet. Ausgehend von der Kolbenstangenpackung 55 befinden sich in Richtung des Kurbelgehäuses 56 zunächst ein erster Zwischenraum 57 und danach ein zweiter Zwischenraum 58. Bei einer mit Öl geschmierten Kolbenstangenpackung 55 kann es von Vorteil sein, eine Abstreifanordnung 1 in die Kolbenstangenpackung 55 zu integrieren, so dass neben dem Durchtritt von Gas auch ein Durchtritt von Öl von dem Bereich der Kolbenstangendichtung 55 in den ersten Zwischenraum 57 vermieden werden kann. In diesem Fall entspricht die Medium-Seite der Seite der dem Verdichtungsraum 53 zugewandten Seite, da der Öldurchtritt von der Kolbenstangenpackung 55 in den Zwischenraum 57 verhindert werden soll. Die ersten Innenflächen 6,25 der Abstreifringe 2,3 sind stets dem abzustreifenden bzw. abzudichtenden Medium zugewandt, also in diesem Fall auch dem Verdichtungsraum 53.

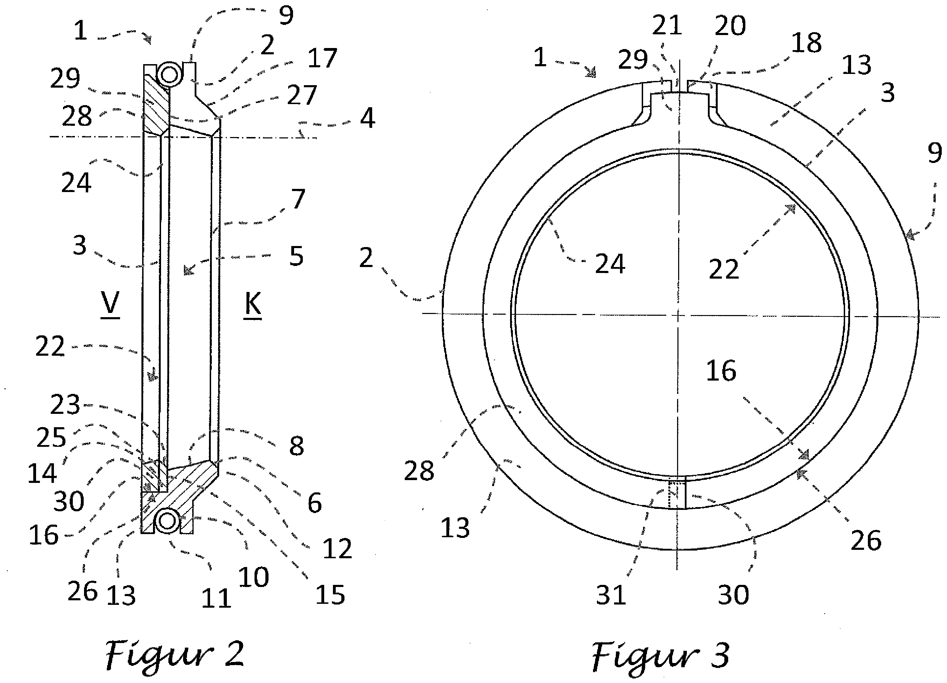

Ferner sind in Figur 1 zwei Abstreifanordnungen 1 in einer Abdichtvorrichtung 45 mit einem Gehäuse 46 kombiniert, welche einen Öldurchtritt vom Kurbelgehäuse 56 in den zweiten Zwischenraum 58 verhindern. Beide Abstreifanordnungen 1 besitzen einen separaten Anpressring 34. Die in Richtung des Kurbelgehäuses 56 installierte Abstreifanordnung 1 ist derart ausgeführt, dass der zweite Abstreifring 3 auf der dem Kurbelgehäuse 56 zugewandten Seite in den ersten Abstreifring 2 eingebracht ist. Die in Richtung des zweiten Zwischenraumes 58 installierte Abstreifanordnung 1 ist derart ausgeführt, dass der zweite Abstreifring 3 auf der dem Kurbelgehäuse 56 abgewandten Seite in den ersten Abstreifring 2 eingebracht ist (siehe auch Figur 2). So wird sichergestellt, dass beide Abstreifanordnungen 1 jeweils mit den zweiten Seitenflächen 13,28 der ersten Abstreifringe 2 und der zweiten Abstreifringe 3 an die jeweilige Stirnwand des Gehäuses 46 der Abdichtvorrichtung 45 angepresst werden.

Figur 2 zeigt eine Abstreifanordnung 1 aus der Figur 1 in vergrößerter SchnittDarstellung, die aus einem ersten Abstreifring 2 und einem zweiten Abstreifring 3 besteht, wobei die Schnittebene entlang der Mittellinie der Stange 4 verläuft.

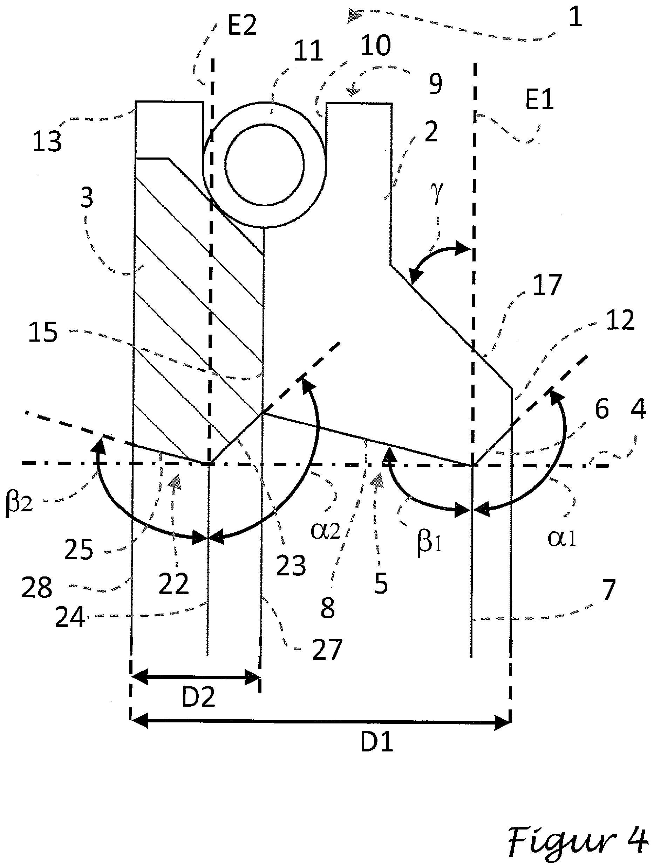

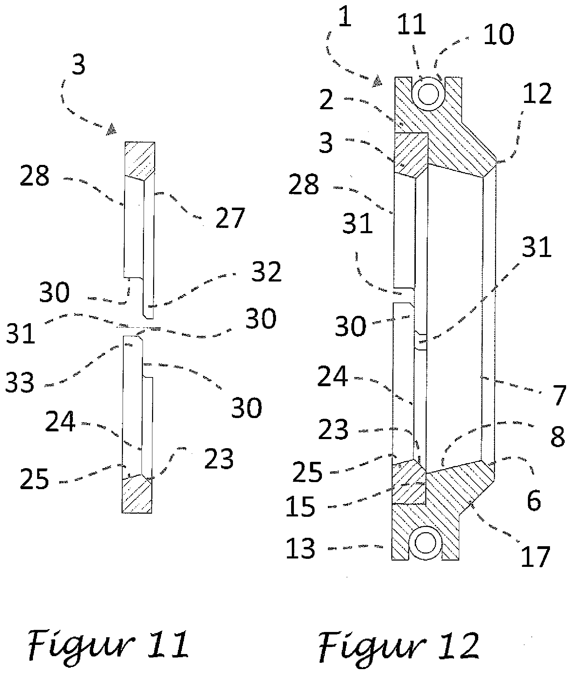

Der erste Abstreifring 2 weist eine erste Seitenfläche 12 und eine zweite Seitenfläche 13 sowie eine radial außen liegende Umfangsfläche 9 und eine radial innen liegende Umfangsfläche 5 auf. In der zweiten Seitenfläche 13 des ersten Abstreifrings 2 ist eine ringförmige Ausnehmung 14 eingebracht, die durch die innen liegende Ringfläche 15 und die umlaufende Begrenzungsfläche 16 gebildet wird. In der ringförmigen Ausnehmung 14 des ersten Abstreifrings 2 ist der zweite Abstreifring 3 angeordnet, der eine erste Seitenfläche 27 und eine zweite Seitenfläche 28 sowie eine radial innen liegende Umfangsfläche 22 und eine radial außen liegende Umfangsfläche 26 aufweist (siehe auch Figuren 3 und 4). Der Abstreifring 3 ist derart ausgebildet, dass er am Trennschnitt 30 einen ersten Lappen 32 und einen zweiten Lappen 33 besitzt (s. Fig. 11).

An der radial innen liegenden Umfangsfläche 5 des ersten Abstreifrings 2 ist eine Abstreifkante 7 und an der radial innen liegenden Umfangsfläche 22 des zweiten Abstreifrings 3 ist eine Abstreifkante 24 angeordnet.

In der radial außen liegenden Umfangsfläche 9 des ersten Abstreifrings 2 befindet sich eine umlaufende Nut 10, in der eine Federzugeinrichtung 11 angeordnet ist.

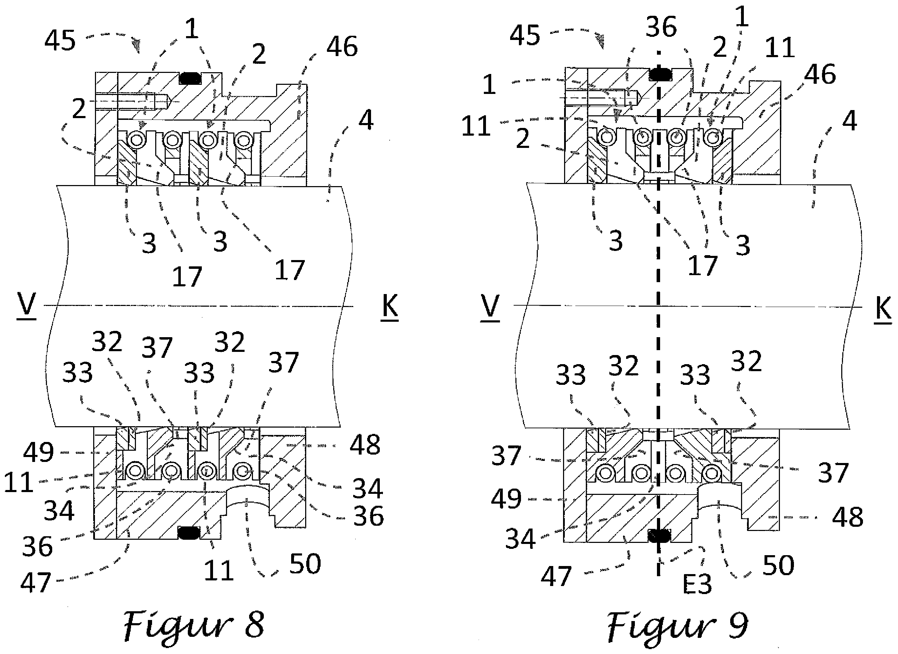

In der oberen Hälfte des Schnittes wird die Oberfläche der Stange 4 mittels einer Strichpunktlinie angedeutet. Die Abstreifkanten 7, 24 liegen linienförmig an der Stange 4 an. In axialer Richtung gesehen liegen die Abstreifkanten 7, 24 punktförmig an der Stange 4 an. Die Seite in Richtung des Kurbelgehäuses 56, welches die abzudichtende Medium-haltige Seite darstellt, ist mit einem K gekennzeichnet. Die Seite in Richtung des Verdichtungsraumes 53, welches die dem Medium abgewandte Seite darstellt, ist mit einem V gekennzeichnet. Dies gilt auch für die Figuren 8, 9 und 13. Der zweite Abstreifring 3 ist auf der dem Verdichtungsraum 50 zugewandten Seite in einer ringförmigen Ausnehmung 14 des ersten Abstreifringes 2 angeordnet. Der erste Abstreifring 2 weist eine umlaufende Nut 10 auf, in der eine Zugfedereinrichtung 11 angeordnet ist.

Figur 3 zeigt die in Figur 2 dargestellte Abstreifanordnung 1 bestehend aus einem ersten Abstreifring 2 und einem zweiten Abstreifring 3 in einer Draufsicht entlang der Richtung der Stange 4. Die ringförmige Ausnehmung 14 des ersten Abstreifrings 2 geht im oberen Teil der Abstreifanordnung 1 in eine Aussparung 18 über, wodurch die zweite Seitenfläche 13 des ersten Abstreifrings 2 unterbrochen wird. Der zweite Abstreifring 3 weist eine Nase 29 auf, die sich in radialer Richtung nach außen erstreckt und in der Aussparung 18 angeordnet ist. Nase 29 und Aussparung 18 bilden zusammen eine Verdrehsicherungseinrichtung.

Der erste Abstreifring 2 weist im Bereich der Aussparung 18 einen Trennschnitt 20 mit einem Zwischenraum 21 auf. Der zweite Abstreifring 3 weist an der dem Trennschnitt 20 gegenüberliegenden Seite ebenfalls einen Trennschnitt 30 mit einem Zwischenraum 31 auf. Die durch die beiden Trennschnitte 20, 30 gebildete Zwischenräume 21, 31 dienen zum Nachstellen der beiden Abstreifringe 2, 3, wenn ein Verschleiß der Abstreifkanten 7, 24 stattgefunden hat. In diesem Fall wird der erste Abstreifring 2 durch die in Figur 2 gezeigte Federeinrichtung 11 in Umfangsrichtung zusammengezogen, wodurch die Spaltbreite der Zwischenräume 21, 31 an den Trennschnitten 20, 30 sowie die Innendurchmesser an den Abstreifkanten 7, 24 der beiden Abstreifringe 2, 3 verringert wird.

Figur 4 zeigt einen vergrößerten Ausschnitt der in Figur 2 dargestellten Abstreifanordnung 1, die einen ersten Abstreifring 2 mit der Dicke D₁ und einen zweiten Abstreifring 3 der Dicke D₂ aufweist. Es gibt D₁ ∼ 3 x D₂. Der untere Teil des Schnittbildes der Figur 2 ist ausgeblendet, so dass der obere Teil, insbesondere die Ausformung der Abstreifkanten 7, 24 vergrößert dargestellt werden kann. Durch die Abstreifkante 7 des ersten Abstreifrings 2 verläuft die Ebene E1, während die Ebene E2 durch die Abstreifkante 24 des zweiten Abstreifrings 3 verläuft. Die radial innen liegende Umfangsfläche 5 des ersten Abstreifrings 2 weist zwei zueinander geneigten Flächen auf, nämlich die erste Innenfläche 6 und die zweite Innenfläche 8, die spitz aufeinander zulaufen und die Abstreifkante 7 bilden. Die radial innen liegende Umfangsfläche 22 des zweiten Abstreifrings weist ebenfalls zwei Flächen auf, nämlich die erste Innenfläche 23 und die zweite Innenfläche 25, die ebenfalls spitz aufeinander zulaufen und die Abstreifkante 24 bilden.

Der Winkel α₁ wird zwischen der Ebene E1 und der ersten Innenfläche 6 des ersten Abstreifrings 2 gebildet. Der Winkel β₁ wird zwischen der Ebene E1 und der zweiten Innenfläche 8 des ersten Abstreifrings 2 gebildet. Die Winkel α₂ und β₂ werden zwischen der Ebene E2 und der ersten Innenfläche 23 des zweiten Abstreifrings 3 bzw. zwischen der Ebene E2 und der zweiten Innenfläche 25 des zweiten Abstreifrings 3 gebildet.

Die erste Seitenfläche 12 des ersten Abstreifrings 2 geht in eine konische Druckfläche 17 über, welche mit der Ebene E1 den Winkel γ einschließt. An dieser Druckfläche 17 kann ein Anpressring 34 angreifen, wie im Zusammenhang mit den Figuren 8 und 9 beschrieben wird.

Der zweite Abstreifring 3 befindet sich passgenau in der ringförmigen Ausnehmung 14 des ersten Abstreifrings 2, so dass der zweite Abstreifring 3 an der Ringfläche 15 sowie der umlaufenden Begrenzungsfläche 16 des ersten Abstreifrings 2 anliegt.

Der Abstand zwischen der ersten Seitenfläche 12 und der zweiten Seitenfläche 13 des ersten Abstreifrings 2 wird als Dicke D1 bezeichnet. Die Dicke D2 bezeichnet den Abstand zwischen der Ringfläche 15 der Ausnehmung 14 und der zweiten Seitenfläche 13 des ersten Abstreifrings 2, was auch dem Abstand zwischen der ersten Seitenfläche 27 und der zweiten Seitenfläche 28 des zweiten Abstreifrings 3 entspricht. Da D2 der Tiefe der ringförmigen Ausnehmung 14 und der Dicke des zweiten Abstreifrings 3 entspricht, wird der zweite Abstreifring 3 vollständig von der ringförmigen Ausnehmung 14 aufgenommen. Die zweite Seitenfläche 13 des ersten Abstreifrings 2 liegt somit in derselben Ebene wie die zweite Seitenfläche 28 des zweiten Abstreifrings 3.

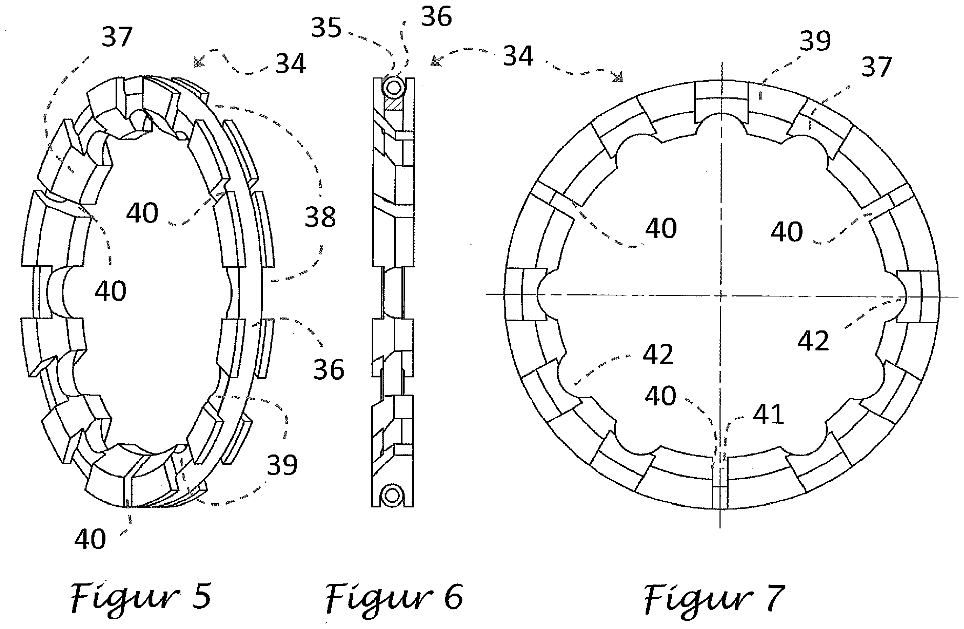

Figur 5 zeigt einen 3-teiligen Anpressring 34, wie er z.B. in einer Abdichtvorrichtung 45 der Figur 8 zum Einsatz kommt, mit radialen Trennschnitten 40, radialen Fräsungen 38, 39 und axialen Bohrungen 42 zum Ablauf des Mediums in einer isometrischen Darstellung.

Figur 6 zeigt den gleichen Anpressring 34 wie in Figur 5, jedoch in einem Schnittbild, dessen Schnittebene entlang der Mittellinie der Stange 4 verläuft.

Figur 7 zeigt den gleichen Anpressring 34 wie Figur 5, jedoch in einer Draufsicht entlang der Richtung der Stange 4.

Der Anpressring 34 weist eine umlaufende Nut 35 auf, in der eine Zugfedereinrichtung 36 angeordnet ist Die Abschnitte des Anpressrings 34 zwischen den Einfräsungen 38, 39 sind mit Abschnitten der umlaufenden Pressfläche 37 versehen. Im unteren Bereich der Figur 7 weist der Anpressring 34 einen radialen Trennschnitt 40 mit einem Zwischenraum 41 auf. Mittels der Zugfedereinrichtung 36 wird der Anpressring zusammengedrückt unter gleichzeitigem Verringern des Zwischenraums 41, wodurch die Pressflächen 37 auf die Druckflächen 17 des ersten Abstreifrings drücken. Dies ist in den Figuren 8 und 9 näher dargestellt.

Figur 8 zeigt eine Abdichtvorrichtung 45 mit zwei Abstreifanordnungen 1, bestehend aus je einem ersten Abstreifring 2 und einem zweiten Abstreifring 3 in einem Schnittbild, dessen Schnittebene entlang der Mittellinie der Stange 4 verläuft. Beide Abstreifanordnungen 1 zeigen axial in die gleiche Richtung und beide Abstreifanordnungen 1 werden durch jeweils einen Anpressring 34 ergänzt. Ferner ist ein Gehäuse 46 mit Umfangswand 47 und Stirnwänden 48, 49 dargestellt, in welchem sich die Abstreifanordnungen 1 und die Anpressringe 34 befinden und welches eine Ablaufbohrung 50 in der Umfangswand 47 aufweist.

Die beiden Abstreifanordnungen 1 mit den dazugehörigen Anpressringen 34 stützen sich innerhalb des Gehäuses 46 an der ersten Stirnwand 48 ab. Durch das Anliegen der abgeschrägten Pressflächen 37 der Anpressringe 34 an den abgeschrägten Druckflächen 17 der ersten Abstreifringe 2 wird die von den Anpressringen 34 auf die Abstreifanordnungen 1 ausgeübte Kraft in eine radiale und in eine axiale Komponente zerlegt. Die axiale Kraftkomponente wirkt auf die ersten Abstreifringe 2 und die darin gefangenen zweiten Abstreifringe 3 derart, dass die Abstreifringe 2, 3 der dem Kurbelgehäuse K abgewandten Abstreifanordnung 1 mit ihren dem Anpressring 34 abgewandten zweiten Seitenflächen 13, 28 an die Stirnwand 49 des Gehäuses 46 der Abdichtvorrichtung 45 gepresst werden und so eine hohe Dichtwirkung auch zwischen den Seitenflächen 13, 28 der Abstreifanordnung 1 und des Gehäuses 46 bzw. der Stirnwand 49 eines Deckels des Gehäuses 46 erzielt werden können. Die Abstreifringe 3 sind derart ausgebildet, dass sie am Trennschnitt 30 einen ersten Lappen 32 und einen zweiten Lappen 33 besitzen (s. Fig. 11).

Die Abstreifanordnungen 1 sind derart angeordnet, dass die Ausnehmungen 14 des ersten Abstreifrings 2 jeweils in Richtung des Verdichtungsraums V weisen.

Figur 9 zeigt eine weitere Ausführungsform einer Abdichtvorrichtung 45 mit zwei Abstreifanordnungen 1, bestehend aus je einem ersten Abstreifring 2 und einem zweiten Abstreifring 3 in einem Schnittbild, dessen Schnittebene entlang der Mittellinie der Stange 4 verläuft.

Die beiden Abstreifanordnungen 1 zeigen in axial entgegengesetzte Richtungen und werden durch einen gemeinsamen Anpressring 34 ergänzt, welcher sich zwischen den Abstreifanordnungen 1 befindet und je eine abgeschrägte Pressfläche 37 in Richtung der beiden Abstreifanordnungen 1 besitzt. Der Anpressring 34 ist zu einer Ebene E3 symmetrisch ausgebildet und weist zwei Zugfedereinrichtungen 36 auf. Durch die abgeschrägten Pressflächen 37 des Anpressrings 34 wird Kraft in axialer Richtung auf die abgeschrägten Druckflächen 17 der beiden ersten Abstreifringe 2 übertragen. Dies führt zu einer Anpressung der ersten Abstreifringe 2 in entgegengesetzter axialer Richtung an die erste Stirnwand 48 und die zweite Stirnwand 49 des Gehäuses 46. Die Abstreifringe 3 sind derart ausgebildet, dass sie am Trennschnitt 30 einen ersten Lappen 32 und einen zweiten Lappen 33 besitzen.

Die beiden Abstreifanordnungen 1 sind gespiegelt ausgeführt, wobei die Winkel α₁, α₂, β₁, β₂ der Innenflächen 6, 8, 23, 25 aber nicht gespiegelt werden. So zeigen auch bei der gespiegelt ausgeführten, zum Kurbelgehäuse K hin orientierten Abstreifdichtung 1 die Winkel α₁ und α₂ ausgehend von den Abstreifkanten 7, 24 in Richtung des Kurbelgehäuses 56, während die Winkel β₁ und β₂ in Richtung des Verdichtungsraumes 53 zeigen. Zusätzlich ist das Gehäuse 46 dargestellt, in welchem sich die Abstreifanordnungen 1 und der Anpressring 34 befinden und welches eine Ablaufbohrung 50 aufweist.

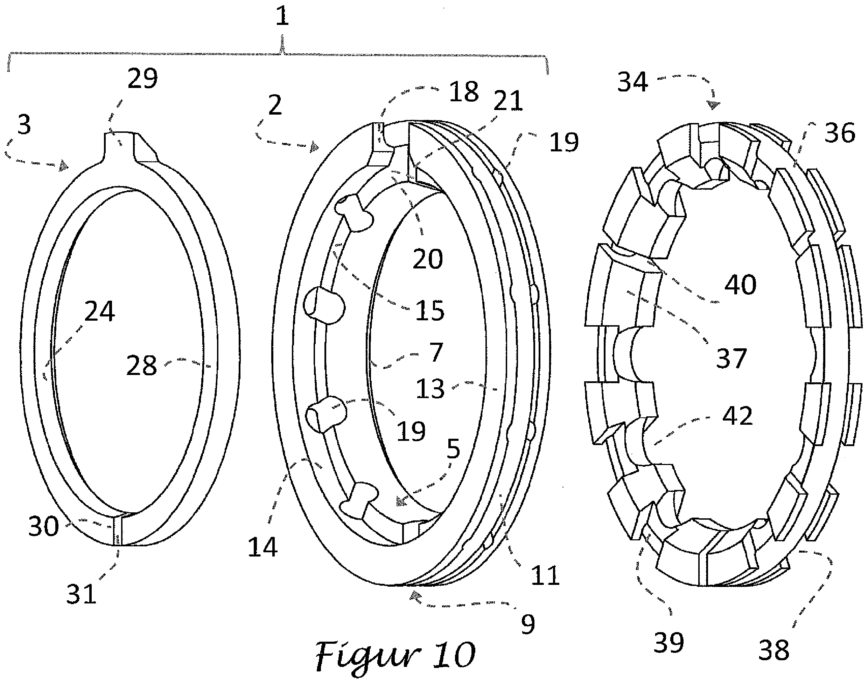

Figur 10 zeigt eine weitere Ausführungsform der Abstreifanordnung 1, bestehend aus dem ersten Abstreifring 2 und dem zweiten Abstreifring 3 in einer isometrischen Darstellung. In dieser Ausführungsform ist der erste Abstreifring 2 mit radialen Bohrungen 19 für einen zusätzlichen Ablauf des Mediums versehen. Die Bohrungen 19 verbinden die radial innen liegende Umfangsfläche 5 des ersten Abstreifrings mit der radial außen liegenden Umfangsfläche 9 des ersten Abstreifrings 2. Die Bohrungen 19 befinden sich teilweise in der ringförmigen Ausnehmung 14. Der Durchmesser der Bohrungen 19 ist größer als der Durchmesser der Federeinrichtung 11, so dass das abzuführende Medium an der Zugfedereinrichtung 11 vorbei nach außen abfließen kann. Ergänzt wird die Abstreifanordnung 1 durch einen Anpressring 34.

Figur 11 zeigt eine Ausführungsform des zweiten Abstreifrings 3 in einem Schnitt, dessen Schnittebene entlang der Mittellinie der Stange 4 verläuft. Bei diesem zweiten Abstreifring 3 sind durch den Trennschnitt 30 ein erster Lappen 32 und ein zweiter Lappen 33 entstanden. Der Trennschnitt 30 verläuft teilweise entlang der Abstreifkante 24. Der erste Lappen 32 erstreckt sich in axialer Richtung von der ersten Seitenfläche 27 bis zur Abstreifkante 24. Der zweite Lappen 33 erstreckt sich in gleicher Richtung von der Abstreifkante 24 bis zur zweiten Seitenfläche 28 des zweiten Abstreifrings 3.

Zur Veranschaulichung ist der Zwischenraum 31 erhöht dargestellt, so dass die Lappen 32, 33 sich nicht berühren. Im Einbauzustand ist der Zwischenraum 31 bzw. das Stoßspiel so groß, dass sich die Lappen 32, 33 berühren und in axialer Richtung gegenseitig überdecken, so wie es in Figur 12 ersichtlich ist.

Figur 12 zeigt eine Ausführungsform der Abstreifanordnung 1 in einem Schnitt, dessen Schnittebene entlang der Mittellinie der Stange 4 verläuft. Der zweite Abstreifring 3 aus der Figur 11 ist in dem ersten Abstreifrings 2 zu einer Abstreifanordnung 1 eingesetzt. Im eingebauten Zustand besitzt der zweite Abstreifring 3 am Trennschnitt 30 einen Zwischenraum 31 derart, dass sich der erste Lappen 32 und der zweite Lappen 33 gegenseitig überdecken. Somit kann ein Durchtritt des abzudichtenden Mediums sowie ein Durchtritt von Gas am Trennschnitt 30 bzw. an der Abstreifkante 24 vermieden werden.

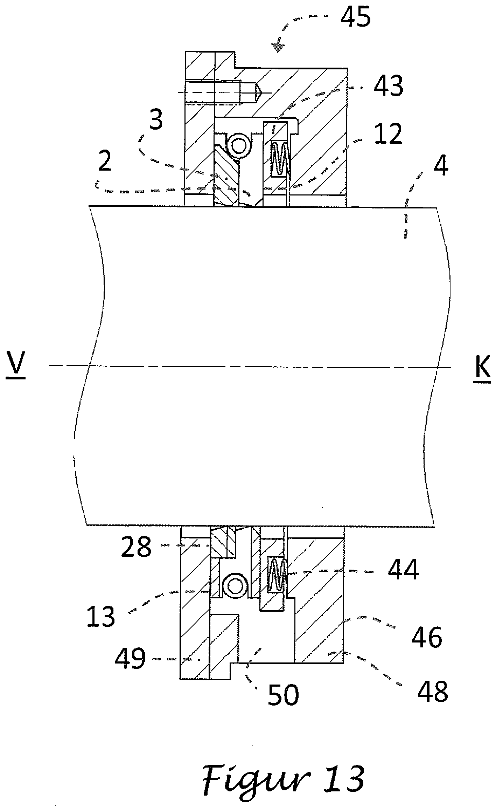

Figur 13 zeigt eine Abdichtvorrichtung 45 mit einer Abstreifanordnung 1, bestehend aus einem ersten Abstreifring 2 und einem zweiten Abstreifring 3 in einem Schnittbild, dessen Schnittebene entlang der Mittellinie der Stange 4 verläuft. Die Anpressung der Abstreifanordnung 1 findet in axialer Richtung nicht durch einen Anpressring 34, sondern durch einen Federteller 43 statt, welcher mit Druckfedern 44 in axialer Richtung bestückt ist. Dementsprechend besitzt der erste Abstreifring 2 auch keine Druckfläche 17 sondern lediglich die erste Seitenfläche 12 an der der Federteller 43 anliegt und die Federkraft in axialer Richtung überträgt, so dass die zweiten Seitenflächen 13, 28 des ersten Abstreifrings 2 und des zweiten Abstreifrings 3 gegen die zweite Stirnwand 49 des Gehäuses 46 der Abdichtvorrichtung 45 gepresst werden.

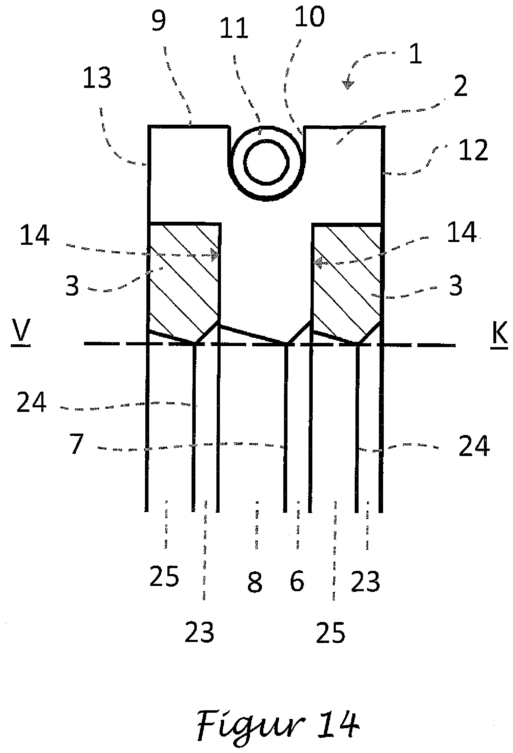

Figur 14 zeigt eine Abstreifanordnung 1 bestehend aus einem ersten Abstreifring 2 in dessen erste Seitenfläche 12 und zweite Seitenfläche 13 jeweils eine ringförmige Ausnehmung 14 eingebracht ist, sowie aus zwei zweiten Abstreifringen 3, welche sich in den ringförmigen Ausnehmungen 14 des ersten Abstreifrings 2 befinden. Beide zweite Abstreifringe 3 besitzen jeweils eine Abstreifkante 24 und eine erste Innenfläche 23 sowie eine zweite Innenfläche 25. Der erste Abstreifring 2 besitzt eine Abstreifkante 7, sowie eine erste Innenfläche 6 und eine zweite Innenfläche 8.

### Bezugszeichenliste

- 1 -: Abstreifanordnung
- 2 -: Erster Abstreifring
- 3 -: Zweiter Abstreifring
- 4 -: Stange
- 5 -: Radial innen liegende Umfangsfläche des ersten Abstreifrings
- 6 -: Erste Innenfläche des ersten Abstreifrings
- 7 -: Abstreifkante des ersten Abstreifrings
- 8 -: Zweite Innenfläche des ersten Abstreifrings
- 9 -: Radial außen liegende Umfangsfläche des ersten Abstreifrings
- 10 -: Nut des ersten Abstreifrings
- 11 -: Zugfedereinrichtung des ersten Abstreifrings
- 12 -: Erste Seitenfläche des ersten Abstreifrings
- 13 -: Zweite Seitenfläche des ersten Abstreifrings
- 14 -: Ringförmige Ausnehmung des ersten Abstreifrings
- 15 -: innenliegende Ringfläche der Ausnehmung des ersten Abstreifrings
- 16 -: umlaufende Begrenzungsfläche
- 17 -: Druckfläche des ersten Abstreifrings
- 18 -: Aussparung des ersten Abstreifrings
- 19 -: Radiale Bohrung im ersten Abstreifring
- 20 -: Trennschnitt des ersten Abstreifrings
- 21 -: Zwischenraum am Trennschnitt des ersten Abstreifrings
- 22 -: Radial innen liegende Umfangsfläche des zweiten Abstreifrings
- 23 -: Erste Innenfläche des zweiten Abstreifrings
- 24 -: Abstreifkante des zweiten Abstreifrings
- 25 -: Zweite Innenfläche des zweiten Abstreifrings
- 26 -: Radial außen liegende Umfangsfläche des zweiten Abstreifrings
- 27 -: Erste Seitenfläche des zweiten Abstreifrings
- 28 -: Zweite Seitenfläche des zweiten Abstreifrings
- 29 -: Nase des zweiten Abstreifrings
- 30 -: Trennschnitt des zweiten Abstreifrings
- 31 -: Zwischenraum am Trennschnitt des zweiten Abstreifrings
- 32 -: Erster Lappen des zweiten Abstreifrings
- 33 -: Zweiter Lappen des zweiten Abstreifrings

- 34 -: Anpressring
- 35 -: Nut des Anpressrings
- 36 -: Zugfedereinrichtung des Anpressrings
- 37 -: Pressfläche des Anpressrings
- 38 -: Einfräsung des Anpressrings
- 39 -: Einfräsung des Anpressrings
- 40 -: Trennschnitt des Anpressrings
- 41 -: Zwischenraum am Trennschnitt des Anpressrings
- 42 -: Bohrung des Anpressrings

- 43 -: Federteller
- 44 -: Druckfeder

- 45 -: Abdichtvorrichtung
- 46 -: Gehäuse
- 47 -: Umfangswand
- 48 -: Erste Stirnwand
- 49 -: Zweite Stirnwand
- 50 -: Ablaufbohrung

- 51 -: Hubkolbenkompressor
- 52 -: Kompressorgehäuse
- 53 -: Verdichtungsraum
- 54 -: Kolben
- 55 -: Kolbenstangenpackung
- 56 -: Kurbelgehäuse
- 57 -: Erster Zwischenraum
- 58 -: Zweiter Zwischenraum

- E1 -: Ebene des ersten Abstreifrings
- E2 -: Ebene des zweiten Abstreifrings
- E3 -: Symmetrieebene des Anpressrings

- α₁ -: Winkel zwischen E1 und der ersten Innenfläche des ersten Abstreifrings
- α₂ -: Winkel zwischen E2 und der ersten Innenfläche des zweiten Abstreifrings
- β₁ -: Winkel zwischen E1 und der zweiten Innenfläche des ersten Abstreifrings
- β₂ -: Winkel zwischen E2 und der zweiten Innenfläche des zweiten Abstreifrings
- γ -: Winkel zwischen E1 und der Druckfläche des ersten Abstreifrings

- D₁: Dicke des ersten Abstreifrings
- D₂: Dicke des zweiten Abstreifrings

## Patentansprüche

1. Abstreifanordnung (1) zum Abdichten einer Stange (4),
mit mindestens einem ersten Abstreifring (2) und mindestens einem zweiten Abstreifring (3),
wobei jeder Abstreifring (2, 3) eine erste Seitenfläche (12, 27) und eine zweite Seitenfläche (13, 28) sowie eine radial innen liegende Umfangsfläche (5, 22) und eine radial außen liegende Umfangsfläche (9, 26) aufweist,
wobei jeder Abstreifring (2, 3) an seiner radial innen liegenden Umfangsfläche (5, 22) eine Abstreifkante (7, 24) aufweist, wobei
der erste Abstreifring (2) in mindestens einer Seitenfläche (12, 13) eine ringförmige Ausnehmung (14) aufweist, in der der zweite Abstreifring (3) angeordnet ist,
**dadurch gekennzeichnet,**
**dass** der zweite Abstreifring (3) gegenüber der Ausnehmung (14) lediglich in radialer Richtung nach innen vorsteht.

2. Abstreifanordnung nach Anspruch 1, **dadurch gekennzeichnet, dass** der erste Abstreifring (2) erste Mittel und der zweite Abstreifring (3) zweite Mittel aufweist, die zusammenwirken und eine Verdrehsicherungseinrichtung bilden.

3. Abstreifanordnung nach Anspruch 2, **dadurch gekennzeichnet, dass** das erste Mittel mindestens eine in der zweiten Seitenfläche (13) des ersten Abstreifrings (2) angeordnete Aussparung (18) ist und dass das zweite Mittel des zweiten Abstreifrings (3) mindestens eine an der radial außen liegenden Umfangsfläche (26) vorstehende Nase (29) ist.

4. Abstreifanordnung nach einem der Ansprüche 1 bis 3, **dadurch gekennzeichnet, dass** die radial innen liegenden Umfangsflächen (5, 22) der Abstreifringe (2, 3) jeweils eine erste Innenfläche (6, 23) und eine zweite Innenfläche (8, 25) aufweisen,
wobei sich die ersten Innenflächen (6, 23) jeweils von der ersten Seitenfläche (12, 27) bis zur Abstreifkante (7, 24) erstrecken und
wobei die zweite Innenfläche (8) des ersten Abstreifrings (2) sich von einer innen liegenden Ringfläche (15) der Ausnehmung (14) bis zur Abstreifkante (7) und die zweite Innenfläche (25) des zweiten Abstreifrings (3) sich von der zweiten Seitenfläche (28) bis zur Abstreifkante (24) erstrecken,
wobei die ersten Innenflächen (6, 23) mit einer in der jeweiligen Abstreifkante (7, 24) liegenden Ebene E1, E2 einen Winkel α₁, α₂ und die zweiten Innenflächen (8, 25) mit der jeweiligen Ebene E1, E2 einen Winkel β₁, β₂ bilden.

5. Abstreifanordnung nach einem der Ansprüche 1 bis 4, **dadurch gekennzeichnet, dass** der erste Abstreifring (2) und der zweite Abstreifring (3) jeweils mindestens einen Trennschnitt (20, 30) mit einem Zwischenraum (21, 31) aufweisen.

6. Abstreifanordnung nach Anspruch 5, **dadurch gekennzeichnet, dass** der mindestens eine Trennschnitt (20) des ersten Abstreifrings (2) vom zweiten Abstreifring (3) überdeckt ist und
dass der mindestens eine Trennschnitt (30) des zweiten Abstreifrings (3) vom ersten Abstreifring (2) überdeckt ist.

7. Abstreifanordnung nach einem der Ansprüche 5 oder 6, **dadurch gekennzeichnet, dass** der zweite Abstreifring (3) am Trennschnitt (30) zwei Lappen (32, 33) besitzt, welche den Zwischenraum (31) gegenseitig in axialer Richtung überdecken.

8. Abstreifanordnung nach einem der Ansprüche 1 bis 7, **dadurch gekennzeichnet, dass** der erste Abstreifring (2) in der außen liegenden Umfangsfläche (9) mindestens eine umlaufende Nut (10) aufweist und dass in der umlaufenden Nut (10) eine Zugfedereinrichtung (11) angeordnet ist.

9. Abdichtvorrichtung (45) mit einem Gehäuse (46), das eine Umfangswand (47) und zwei Stirnwände (48, 49) aufweist und
mit mindestens einer Abstreifanordnung (1) nach einem der Ansprüche 1 bis 8, die im Gehäuse (46) angeordnet ist.

10. Abdichtvorrichtung nach Anspruch 9, **dadurch gekennzeichnet, dass** mindestens ein Anpressring (34) vorgesehen ist, der zwischen einer Stirnwand (48, 49) und einer Abstreifanordnung (1) angeordnet ist.

11. Abdichtvorrichtung nach einem der Ansprüche 9 oder 10, **dadurch gekennzeichnet, dass** mindestens ein Anpressring (34) vorgesehen ist, der zwischen zwei Abstreifanordnungen (1) angeordnet ist.

12. Abdichtvorrichtung nach einem der Ansprüche 10 oder 11, **dadurch gekennzeichnet, dass** der Anpressring (34) mindestens eine umlaufende Pressfläche (37) aufweist, die an der Druckfläche (17) des ersten Abstreifrings (2) anliegt.

13. Abdichtvorrichtung nach einem der Ansprüche 10 bis 12, **dadurch gekennzeichnet, dass** der Anpressring (34) mindestens einen Trennschnitt (40) mit einem Zwischenraum (41) aufweist.

14. Abdichtvorrichtung nach einem der Ansprüche 10 bis 13, **dadurch gekennzeichnet, dass** der Anpressring (34) in seiner radial außen liegenden Umfangsfläche mindestens eine umlaufende Nut (35) aufweist und in der umlaufenden Nut (35) eine Zugfedereinrichtung (36) angeordnet ist.

15. Abdichtvorrichtung nach Anspruch 10, **dadurch gekennzeichnet, dass** der Anpressring (34) als Federteller (43) mit in axialer Richtung wirkenden Druckfedern (44) ausgestaltet ist.

## Claims

1. Scraping arrangement (1) for sealing a rod (4),
having at least a first scraping ring (2) and at least a second scraping ring (3),
wherein each scraping ring (2, 3) has a first side face (12, 27) and a second side face (13, 28) and a radially inner peripheral face (5, 22) and a radially outer peripheral face (9, 26),
wherein each scraping ring (2, 3) has on the radially inner peripheral face (5, 22) thereof a scraping edge (7, 24), wherein
the first scraping ring (2) in at least one side face (12, 13) has an annular recess (14) in which the second scraping ring (3) is arranged,
**characterised in that**
the second scraping ring (3) protrudes only in a radially inward direction with respect to the recess (14).

2. Scraping arrangement according to claim 1, **characterised in that** the first scraping ring (2) has first means and the second scraping ring (3) has second means which cooperate and form a torsion prevention device.

3. Scraping arrangement according to claim 2, **characterised in that** the first means is at least one recess (18) which is arranged in the second side face (13) of the first scraping ring (2) and **in that** the second means of the second scraping ring (3) is at least one projection (29) which protrudes at the radially outer peripheral face (26).

4. Scraping arrangement according to any one of claims 1 to 3, **characterised in that** the radially inner peripheral faces (5, 22) of the scraping rings (2, 3) each have a first inner face (6, 23) and a second inner face (8, 25),
wherein the first inner faces (6, 23) each extend from the first side face (12, 27) as far as the scraping edge (7, 24), and
wherein the second inner face (8) of the first scraping ring (2) extends from an inner annular face (15) of the recess (14) as far as the scraping edge (7) and the second inner face (25) of the second scraping ring (3) extends from the second side face (28) as far as the scraping edge (24),
wherein the first inner faces (6, 23) form with a plane E1,
E2 which is located in the respective scraping edge (7, 24) an angle α₁, α₂ and the second inner faces (8, 25) form with the respective plane E1, E2 an angle β₁, β₂.

5. Scraping arrangement according to any one of claims 1 to 4, **characterised in that** the first scraping ring (2) and the second scraping ring (3) each have at least one separation cut (20, 30) with an intermediate space (21, 31).

6. Scraping arrangement according to claim 5, **characterised in that** the at least one separation cut (20) of the first scraping ring (2) is covered by the second scraping ring (3), and
**in that** the at least one separation cut (30) of the second scraping ring (3) is covered by the first scraping ring (2).

7. Scraping arrangement according to either claim 5 or claim 6, **characterised in that** the second scraping ring (3) has on the separation cut (30) two lobes (32, 33) which mutually cover the intermediate space (31) in an axial direction.

8. Scraping arrangement according to any one of claims 1 to 7, **characterised in that** the first scraping ring (2) has in the outer peripheral face (9) at least one peripheral groove (10) and **in that** a tension spring device (11) is arranged in the peripheral groove (10).

9. Sealing device (45) having a housing (46) which has a peripheral wall (47) and two end walls (48, 49), and
having at least one scraping arrangement (1) according to any one of claims 1 to 8 which is arranged in the housing (46).

10. Sealing device according to claim 9, **characterised in that** there is provided at least one pressing ring (34) which is arranged between an end wall (48, 49) and a scraping arrangement (1).

11. Sealing device according to either claim 9 or claim 10, **characterised in that** there is provided at least one pressing ring (34) which is arranged between two scraping arrangements (1).

12. Sealing device according to either claim 10 or claim 11, **characterised in that** the pressing ring (34) has at least one peripheral pressing face (37) which abuts the pressing face (17) of the first scraping ring (2).

13. Sealing device according to any one of claims 10 to 12, **characterised in that** the pressing ring (34) has at least one separation cut (40) with an intermediate space (41).

14. Sealing device according to any one of claims 10 to 13, **characterised in that** the pressing ring (34) has at least one peripheral groove (35) in the radially outer peripheral face thereof and a tension spring device (36) is arranged in the peripheral groove (35).

15. Sealing device according to claim 10, **characterised in that** the pressing ring (34) is constructed as a resilient plate (43) with pressure springs (44) which act in an axial direction.

## Revendications

1. Ensemble racleur (1) affecté à l'étanchement d'une tige (4),
comprenant au moins une première bague de raclage (2) et au moins une seconde bague de raclage (3),
chaque bague de raclage (2, 3) comportant une première surface latérale (12, 27) et une seconde surface latérale (13, 28), ainsi qu'une surface périphérique (5, 22) occupant une position radialement intérieure et une surface périphérique (9, 26) occupant une position radialement extérieure,
chaque bague de raclage (2, 3) étant pourvue d'une arête racleuse (7, 24) sur sa surface périphérique (5, 22) occupant une position radialement intérieure, sachant que la première bague de raclage (2) est munie, dans au moins une surface latérale (12, 13), d'un évidement annulaire (14) dans lequel la seconde bague de raclage (3) est logée, **caractérisé par le fait**
**que** la seconde bague de raclage (3) fait saillie vers l'intérieur, par rapport à l'évidement (14), uniquement dans le sens radial.

2. Ensemble racleur selon la revendication 1, **caractérisé par le fait que** la première bague de raclage (2) et la seconde bague de raclage (3) sont dotées, respectivement, de premiers moyens et de seconds moyens qui coopèrent et forment un système d'arrêt rotatoire.

3. Ensemble racleur selon la revendication 2, **caractérisé par le fait que** le premier moyen se présente au moins comme une discontinuité (18) ménagée dans la seconde surface latérale (13) de la première bague de raclage (2) ; et **par le fait que** le second moyen de la seconde bague de raclage (3) se présente au moins comme une protubérance (29) faisant saillie au-delà de la surface périphérique (26) occupant une position radialement extérieure.

4. Ensemble racleur selon l'une des revendications 1 à 3, **caractérisé par le fait que** les surfaces périphériques (5, 22) des bagues de raclage (2, 3), qui occupent des positions radialement intérieures, sont respectivement munies d'une première surface intérieure (6, 23) et d'une seconde surface intérieure (8, 25),
sachant que les premières surfaces intérieures (6, 23) s'étendent, à chaque fois, jusqu'à l'arête racleuse (7, 24) à partir de la première surface latérale (12, 27), et
sachant que la seconde surface intérieure (8) de la première bague de raclage (2) s'étend jusqu'à l'arête racleuse (7), à partir d'une surface annulaire (15) de l'évidement (14) qui occupe une position intérieure, et que la seconde surface intérieure (25) de la seconde bague de raclage (3) s'étend jusqu'à l'arête racleuse (24) à partir de la seconde surface latérale (28),
sachant que lesdites premières surfaces intérieures (6, 23) décrivent un angle α₁, α₂ avec un plan E1, E2 situé dans l'arête racleuse (7, 24) considérée, et que les secondes surfaces intérieures (8, 25) décrivent un angle β₁, β₂ avec le plan E1, E2 considéré.

5. Ensemble racleur selon l'une des revendications 1 à 4, **caractérisé par le fait que** la première bague de raclage (2) et la seconde bague de raclage (3) sont pourvues, à chaque fois, d'au moins une découpe de séparation (20, 30) présentant un espace interstitiel (21, 31).

6. Ensemble racleur selon la revendication 5, **caractérisé par le fait que** la découpe de séparation (20), à présence minimale dans la première bague de raclage (2), est recouverte par la seconde bague de raclage (3) ; et
**par le fait que** la découpe de séparation (30), à présence minimale dans ladite seconde bague de raclage (3), est recouverte par ladite première bague de raclage (2).

7. Ensemble racleur selon l'une des revendications 5 ou 6, **caractérisé par le fait que** la seconde bague de raclage (3) est dotée, au niveau de la découpe de séparation (30), de deux pattes (32, 33) qui recouvrent réciproquement l'espace interstitiel (31) dans le sens axial

8. Ensemble racleur selon l'une des revendications 1 à 7, **caractérisé par le fait que** la première bague de raclage (2) est munie d'au moins une rainure circonférentielle (10) dans la surface périphérique (9) occupant une position extérieure ; et **par le fait qu'**un agencement à ressort de traction (11) est disposé dans ladite rainure circonférentielle (10).

9. Dispositif d'étanchement (45) comprenant un boîtier (46), pourvu d'une paroi périphérique (47) et de deux parois latérales (48, 49), et
au moins un ensemble racleur (1) conforme à l'une des revendications 1 à 8, logé dans ledit boîtier (46).

10. Dispositif d'étanchement selon la revendication 9, **caractérisé par le fait qu'**il est prévu au moins une bague (34) à pression de contact, interposée entre une paroi d'extrémité (48, 49) et un ensemble racleur (1).

11. Dispositif d'étanchement selon l'une des revendications 9 ou 10, **caractérisé par le fait qu'**il est prévu au moins une bague (34) à pression de contact, interposée entre deux ensembles racleurs (1).

12. Dispositif d'étanchement selon l'une des revendications 10 ou 11, **caractérisé par le fait que** la bague (34) à pression de contact est pourvue d'au moins une surface circonférentielle de pression (37), en applique contre la surface de pression (17) de la première bague de raclage (2).

13. Dispositif d'étanchement selon l'une des revendications 10 à 12, **caractérisé par le fait que** la bague (34) à pression de contact est munie d'au moins une découpe de séparation (40) présentant un espace interstitiel (41).

14. Dispositif d'étanchement selon l'une des revendications 10 à 13, **caractérisé par le fait que** la bague (34) à pression de contact est dotée d'au moins une rainure circonférentielle (35) dans sa surface périphérique occupant une position radialement extérieure, et un agencement à ressort de traction (36) est disposé dans ladite rainure circonférentielle (35).

15. Dispositif d'étanchement selon la revendication 10, **caractérisé par le fait que** la bague (34) à pression de contact est conçue comme une rondelle élastique (43), avec des ressorts de pression (44) agissant dans le sens axial.
